# EUROPEAN PATENT APPLICATION

(11) **EP 3 460 941 A1**
(43) Date of publication of application: **27.03.2019**
(21) Application number: 18193321.9
(22) Date of filing: 10.09.2018
(51) Int. Cl.: H02J 3/00, G06Q 50/06, H02J 13/00

(54) **AN ENERGY INTERNET ROUTER**

(30) Priority: 20.09.2017 CN 201710855193; 10.11.2017 CN 201711107184
(71) Applicant: Hepu Technology Development (Beijing) Co. Ltd., 100176 Beijing (CN)
(72) Inventor: Cui, Hua, Beijing (CN); Yang, Yusen, Beijing (CN)
(74) Representative: Huang, Liwei

(57) **Abstract**

The invention discloses an energy internet router (100), including a control module (101), which is used for energy exchange and routing management among multiple distributed energy stations and the distributed energy users, as well as point-to-point electricity transaction control in the same local area network (LAN); an acquisition module (102), which is connected with the control module (101) for acquiring the electricity measurement data of the ammeter (200); and a blockchain module (103), which is used for data interaction with the control module (101), implementation of point-to-point electricity transaction among the nodes in the blockchain network in the area, and storage of distributed electricity measurement and transaction data. The energy internet router of the invention is used in combination with the ammeter. The blockchain module is used for electricity transaction and recording, so that the final electricity information and point-to-point electricity transaction information are distributed and stored in the blockchain network in a tamper-resistant manner. The electricity of a distributed smart micro grid can be measured, traded and recorded.

## Description

### Technical Field

The invention relates to the technical field of the measurement control and blockchain in the internet of things and the energy internet, in particular to an energy internet router.

### Background Art

Due to the uniqueness of power system, a super huge network - power grid is formed naturally from power generation, transmission and distribution to electricity utilization. At one end are distributed renewable energy sources such as coal gas, nuclear power, hydropower, traditional energy sources, wind and light energy. At the other end are millions of high energy-consuming power units, hundreds of millions of electricity users, future smart appliances and electric vehicles. Various sensors all over the country generate vast amounts of real-time big data all the time, creating a vast energy internet.

Data the energy internet is mainly sourced from the following aspects:
1) Coal-fired power plants, 2) natural gas power stations, 3) wind field PV power stations, 4) natural gas combined cooling heating and power (CCHP) distributed energy sources, 5) distributed wind energy/solar energy/energy storage battery micro grids, 6) smart substations at all levels, 7) provincial and municipal dispatch SCADA at all levels, 8) hundreds of millions of ammeters, 9) millions of high energy-consuming power units, and 10) future electric vehicles. Large numbers of distributed wind power PV and storage batteries will spring up in the future.

The energy internet will greatly promote the development of distributed energy in the future. In terms of power supply, with a lot of renewable energy installed, the random fluctuations of the power supply will pose a major challenge to the system. In terms of load, the randomness and rigidity of the load side will increase continuously due to the change of power consumption structure and the rapid development of electric vehicles. In addition, the distributed energy measurement and transaction will become the mainstreams due to the appearance of energy generating and consuming buildings. However, the current centralized power grid control mode and the way of unified power grid collection of meter data will face great challenges in the future.

At present, the energy internet routers in the prior art cannot collect, transaction or record the electricity of distributed wind power PV and storage battery, and cannot adapt to the demand of big data for the energy internet.

### Summary of the Invention

### (I) Aim of the invention

The invention is aimed to provide an energy internet router, wherein the blockchain module is used to solve the issues that the routers in the prior art cannot collect, transact or record the electricity of distributed wind power PV and storage battery, and cannot adapt to the demand of big data for the energy internet. The energy internet router realizes the distributed power generation and storage, and two-way measurement of generating capacity and electricity consumption of electricity users by combining with the ammeter. The electricity of a distributed smart micro grid can be measured, traded and recorded. The energy internet router can be used as the basis of transaction charge at the distributed generation and the power consumption sides, making the micro grid more economically viable.

### (II) Technical solution

For solving the issues above, the invention discloses an energy internet router, including a control module, which is used for energy exchange and routing management among multiple distributed energy stations and the distributed energy users, as well as point-to-point electricity transaction control in the same local area network (LAN); an acquisition module, which is connected with the control module for acquiring the electricity measurement data of the ammeter; and a blockchain module, which is used for data interaction with the control module, implementation of point-to-point electricity transaction among the nodes in the blockchain network in the area, and storage of distributed electricity measurement and transaction data. The energy internet router is set with a blockchain module, which is mainly used for electricity transaction and recording, so that the final electricity information and point-to-point electricity transaction information are distributed and stored in the blockchain network in a tamper-resistant manner. It realizes the distributed power generation and storage, and two-way measurement of generating capacity and electricity consumption of electricity users. The electricity of a distributed smart micro grid can be measured, traded and recorded.

Further, the blockchain module is set with a data layer, which is used for storing the following data: electricity measurement data obtained by the ammeter; electricity transaction data, i.e. all the point-to-point electricity transaction data in the blockchain; electricity purchasing and selling identity, i.e. a binary character string makes the electricity purchasing and selling identity for distinguishing the Buyer and the Seller; and timestamp, used for recording the time of point-to-point electricity transactions in the blockchain network; the data layer is also used for stamping the timestamp for the electricity purchasing and selling transaction data at each node, forming the data block and recording it in the blockchain in a tamper-resistant manner.

Further, the power purchasing and selling identifier refers to a binary character string having a predetermined meaning; a first set value of the binary character string represents that a current node is the power seller; and a second set value of the binary character string represents that a current node is the power purchaser.

Further, the data layer comprises an encryption management unit, which is used for encrypting the data by means of hardware encryption and managing the user's private key information.

Further, the data layer also comprises one or the combination of several of data block, Hash, Merkle, root data, point-to-point network, key management, public key, private key, and asymmetric encryption and authentication mechanism.

Further, the blockchain module is also set with a contract & consensus layer, which is used for automatically confirming the electricity transaction between the Buyer and the Seller in the scope of the blockchain network by means of smart contract; the electricity transaction includes electricity price, electricity quantity and condition of the transaction..

Further, the contract & consensus layer also comprises one or the combination of several of an account center unit, an electricity purchasing and selling registration unit, an electricity purchasing and selling price matching unit, an electricity purchasing and selling transaction implementation unit, a consensus mechanism unit, a smart contract unit, a script code unit and a payment system unit.

Further, the blockchain is a private chain or a consortium chain; all or part of the nodes of the private chain or the consortium chain have relatively complex access to reading, writing and bookkeeping..

Further, the energy internet router also comprises a communication interface, which is connected with the CPU for data transmission; the blockchain module transmits the processed data to a blockchain electricity transaction monitoring platform through the communication module.

Further, the communication module comprises one or the combination of several of RS485 communication, RFID RF, Bluetooth, WIFI and power line carrier.

Further, the energy internet router also comprises a positioning module, which is connected with the control module for positioning the geographical position of the energy internet router. It realizes the informatization of geographical position of the whole smart grid, so as to lay a foundation for the optimal rationalization of the point-to-point automatic electricity transaction in the blockchain,, that is to say, it can be agreed in the blockchain smart contract that in the case of the same offer, the electricity transaction between two geographically closest nodes may be achieved in priority, thus to minimize the power transmission costs and losses.

Further, the blockchain module may adopt the virtual currency or electronic currency for electricity transaction or settlement.

Further, the blockchain module is also used for giving a unique ID to each energy internet router to form a node with unique ID in the blockchain.

### (III) Advantageous effects

The technical solution of the invention has the following advantageous technical effects:
The invention provides an energy internet router, wherein it collects the electricity quantity of distributed wind power PV and storage battery through the blockchain electricity transaction monitoring platform by using the multilevel structure of the internet of things. The energy internet router is set with a blockchain module, which is mainly used for electricity transaction and recording, so that the final electricity information and point-to-point electricity transaction information are distributed and stored in the blockchain network in a tamper-resistant manner. The energy internet router provided by the invention realizes the distributed power generation and storage, and two-way measurement of generating capacity and electricity consumption of electricity users by combining with the ammeter. The electricity of a distributed smart micro grid can be measured, traded and recorded. The energy internet router can be used as the basis of transaction charge at the distributed generation and the power consumption sides, making the micro grid more economically viable. Meanwhile, the users can intelligently manage and monitor own distributed electricity generation, storage and utilization facilities via various mobile terminals.

### Description of Drawings

Fig. 1 shows position of the energy internet router provided by the Embodiment 1 of this invention in the framework of the blockchain electricity transaction monitoring platform;
Fig. 2 shows the schematic diagram of compositions of the energy internet router provided by the Embodiment 1 of this invention and the connection with the blockchain electricity transaction monitoring platform;
Fig. 3 shows a constitutional diagram of the energy internet router provided by the Embodiment 2 of this invention.

Signs of drawings:
100-energy internet router, 101-control module, 102-acquisition module, 103-blockchain module, 1031-data layer, 1032-network layer, 1033-contract & consensus layer, 104-communication interface, 105-power electronic conversion and energy storage module, 106-positioning module, 200-ameter, 201-CPU, 202-measuring module, 203-communication interface, 204- digital signal module, 205- protocol interface module, 206- power module, 207-display module, 208-clock module, 300-blockchain electricity transaction monitoring platform

### Specific Embodiments

The present invention will be further described in details with reference to the drawings in conjunction with specific embodiments, to make the aims, technical solution and advantages of the invention more clear. It shall be understood that these descriptions are only exemplary and not to limit the scope of the present invention. In addition, the description about the well-known structure and technology is omitted in the following statement to avoid unnecessary confusion of the concept of the invention.

Before giving a detailed description of an energy internet router provided by the invention, the relevant technologies of blockchain are first introduced.

The advent of bitcoin (BTC) in 2009 brought a disruptive achievement - blockchain technology. The blockchain is a secure accounting database composed of data blocks. Users can find the data in this constantly updated and upgraded platform. For financial institutions, the blockchain can speed up transaction processing, lower costs, reduce middlemen, improve market insight and increase business transparency.

The blockchain, as the underlying technology of cryptocurrency BTC, is a great innovation. Blockchain technology can be used to combat fraud and illegal transactions. At present, the blockchain technology has been adopted in many industries, especially adopted as a tool to realize real energy internet technology. The functions of the blockchain are as follows: first, the blockchain-based data is impartial, so as to ensure trust; and the public-private key combined access right can protect the privacy, truly achieving confidentiality and credible measurement; second, the blockchain is tamper-resistant, and the subjects are cooperate with each other in a certain way with trust or mandatory trust, achieving the ubiquitous interaction under mandatory trust; third, the blockchain is integrated with big data and artificial intelligence, forming a reliable oracle machine to sign external data and realize the self-discipline control of virtual and real interaction; fourth, there is no need to entrust the central platform for making the inter-device point-to-point interactive decisions based on blockchain deployment, and decentralization can realize the democratic and distributed decision of device; and fifth, the random game is conducted among the subjects based on clear rules of interaction, and the system presents neutral and benign evolution, complying with the law of marketization, and coordination and evolvability of competition evolution.

The role of the blockchain is more than just disintermediation. The blockchain may upend markets and existing value chains and create new markets by releasing previously untapped supplies. The combination of blockchain and energy internet measuring system will provide reliable power transaction and measurement technical support for future energy internet development.

### Embodiment 1

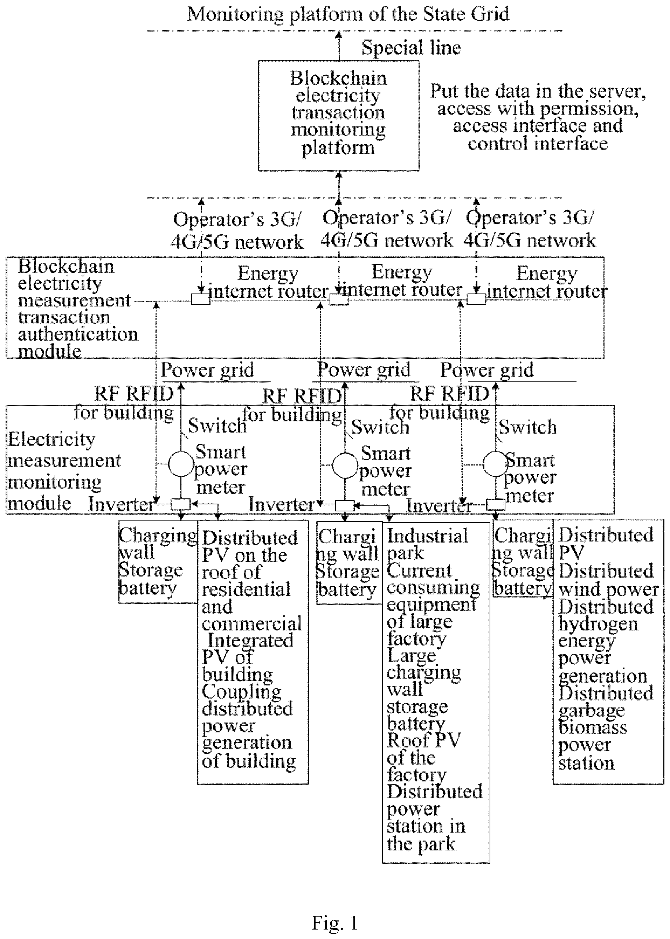

Fig. 1 shows position of the energy internet router provided by the Embodiment 1 of this invention in the framework of the blockchain electricity transaction monitoring platform;

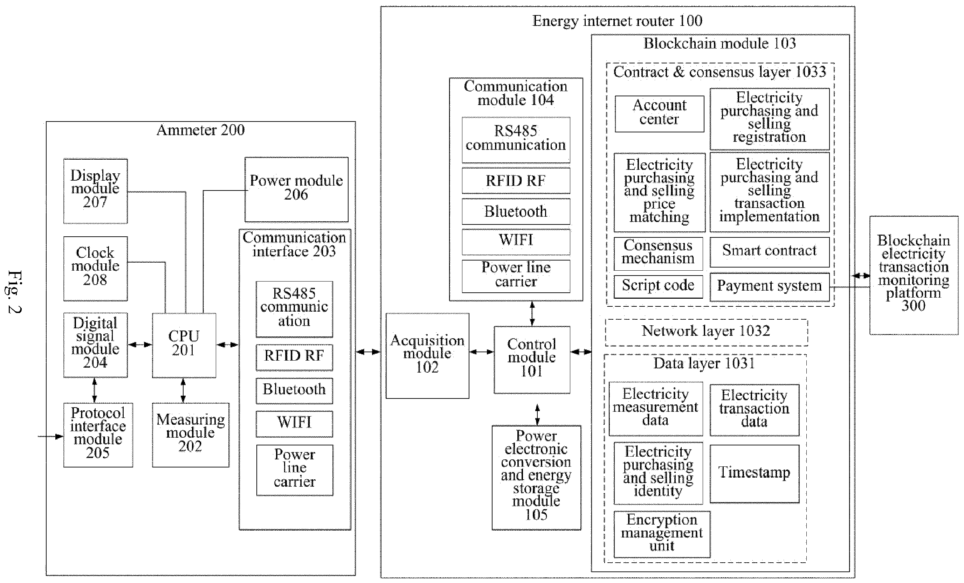

Fig. 2 shows the schematic diagram of composition of the energy internet router provided by the Embodiment 1 of this invention and the connection with the blockchain electricity transaction monitoring platform;

Please refer to Fig. 1 and Fig. 2. This embodiment provides an energy internet router 100, including: a control module 101, an acquisition module 102 and a blockchain module 103.

The control module 101 is used for energy exchange and routing management among multiple distributed energy stations and the distributed energy users, as well as point-to-point electricity transaction control in the same local area network (LAN).

The acquisition module 102 is used for acquiring the electricity measurement data of the ammeter 200. Specially, the acquisition module 102 is used for acquiring the electricity measurement data of the measuring module 202 in the ammeter 200.

The blockchain module 103 is used for data interaction with the control module 101, implementation of point-to-point electricity transaction among the nodes in the blockchain network in the area, and storage of distributed electricity measurement and transaction data. The blockchain module 103 is used for carry out electricity transaction and record, so that the final electricity information and point-to-point electricity transaction information are distributed and stored in the blockchain network in a tamper-resistant manner. The blockchain is a private chain or a consortium chain; all or part of the nodes of the private chain or the consortium chain have relatively complex access to reading, writing and bookkeeping..

In this embodiment, the blockchain module 103 is also used for encryption management of the electricity purchasing and selling identity, electricity information and transaction information.

In this embodiment, the blockchain module 103 is also used for giving a unique ID to each energy internet router 100 to form a node with unique ID in the blockchain.

Please refer to Fig. 2. In this embodiment, the blockchain module 103 is set with a data layer 1031, which is used for storing the following data:
electricity measurement data, which is obtained by the ammeter 200; specifically, the electricity measurement data refers to the electricity data obtained by the ammeter 200 through measurement;
electricity transaction data, i.e. all the point-to-point electricity transaction data in the blockchain; specifically, the electricity transaction data refers to all point-to-point electricity transaction data in the blockchain, which forms the data block and is recorded in the blockchain in a tamper-resistant manner;
electricity purchasing and selling identity, i.e. a binary character string makes the electricity purchasing and selling identity for distinguishing the Buyer and the Seller;
the power purchasing and selling identifier refers to a binary character string having a predetermined meaning; a first set value of the binary character string represents that a current node is the power seller; and a second set value of the binary character string represents that a current node is the power purchaser.; the current node may be the Seller at one time, and becomes the Buyer at next time (for example, when the node is connected with a charge-discharge battery); and
timestamp, used for recording the time of point-to-point electricity transactions in the blockchain network; specifically, the timestamp is used for recording the time of point-to-point electricity transactions in the blockchain network, and is generated by encryption techniques;

The data layer 1031 is also used for stamping the timestamp for the electricity purchasing and selling transaction data occurring at each node, forming the data block and recording it in the blockchain in a tamper-resistant manner.

The data layer 1031 comprises an encryption management unit, which is used for encrypting the data by means of hardware encryption and managing the user's private key information.

The data layer 1031 also comprises one or the combination of several of data block, Hash, Merkle, root data, point-to-point network, key management, public key, private key, and asymmetric encryption and authentication mechanism.

Please refer to Fig. 2. In this embodiment, the blockchain module 103 is also set with a network layer 1032, including P2P networking mechanism, a data transmission mechanism and a data verification mechanism, providing the blockchain module 1032 with automatic networking function.

Please refer to Fig. 2. In this embodiment, the blockchain module 103 is also set with a contract & consensus layer 1033, which is used for automatically confirming the electricity transaction between the Buyer and the Seller in the scope of the blockchain network by means of smart contract; the electricity transaction includes electricity price, electricity quantity and condition of the transaction..

The contract & consensus layer 1033 also comprises one or the combination of several of an account center unit, an electricity purchasing and selling registration unit, an electricity purchasing and selling price matching unit, an electricity purchasing and selling transaction implementation unit, a consensus mechanism unit, a smart contract unit, a script code unit and a payment system unit.

Please refer to Fig. 2. In this embodiment, the energy internet router 100 also comprises a communication module 104, which is connected with the control module 101 for data transmission. The blockchain module 103 transmits the processed data to a blockchain electricity transaction monitoring platform 300 through the communication module 104. The blockchain electricity transaction monitoring platform 300 is used for collecting the electricity transaction data in the distributed blockchain module 103, and displaying, counting or analyzing such data thereon in a visual way.

The communication module 104 comprises one or the combination of several of RS485 communication, RFID RF, Bluetooth, WIFI and power line carrier. However, the invention is not restricted by this, and the communication module 104 also can be in other forms.

The RF wireless transmission technology is adopted for wireless communication at the building terminal on ground floor with more reliable stability, safety and confidentiality ,which is the technical prerequisite to ensure the stable operation of the charge measurement system.

Please refer to Fig. 2. In this embodiment, the energy internet router 100 also comprises a power electronic conversion and energy storage module 105, which is connected with the control module 101 for energy conversion and storage under the control of the control module 101. So that the control module 101 is also used for wind energy storage and load co-absorption in the same LAN.

Please refer to Fig. 2. In this embodiment, the ammeter 200 comprises a CPU 201, a measuring module 202 and a communication interface 203.

The CPU 201 is used for processing and calculating the data in the ammeter 200 and controlling the data exchange.

The measuring module 202 is connected with the CPU 201 and used for measurement of electricity.

The communication interface 203 is connected with the CPU 201 for data transmission.

Please refer to Fig. 2. In this embodiment, the ammeter 200 also comprises a digital signal module 204, a protocol interface module 205, a power module 206, a display module 207 and a clock module 208.

The digital signal module 204 is connected with the CPU 201 for collecting the digital signals or analogue signals of the measuring module 102 and converting the analogue signals into the digital signals.

The protocol interface module 205 is connected with the CPU 201 for managing the communication protocol interface and receiving the data input from outside.

The power module 206 is connected with the CPU 201 for providing work power to the ammeter 200.

The display module 207 is connected with the CPU 201, and composed of a liquid crystal display for displaying relevant data. However, the invention is not restricted by this, and the display also can be in other types.

The clock module 208 is connected with the CPU 201 for providing running clock to it.

Components of the ammeter 200 in this invention includes but not limited to the above ones, and also includes the necessary components of the conventional meter.

Specifically, in this embodiment, the energy internet router 100 is connected with the ammeter 200 to realize the data exchange between the energy internet router 100 and the CPU 201 in the ammeter 200.

When the ammeter 200 is a two-way smart power meter, the measuring module 202 can realize two-way measurement, so that the ammeter 200 is used for two-way measurement of electricity. The energy internet router 100 is used in combination with the ammeter 200. At this moment, the energy internet router 100 is not only used for energy exchange and routing management among multiple distributed energy networks, as well as wind energy storage and load co-absorption in the same LAN, but also used for acquiring the electricity measurement data of the ammeter 200. It realizes the distributed power generation and storage, and two-way measurement of generating capacity and electricity consumption of electricity users. The electricity of a distributed smart micro grid can be measured, traded and recorded. The energy internet router can be used as the basis of transaction charge at the distributed generation and the power consumption sides, making the micro grid more economically viable. Meanwhile, the users can intelligently manage and monitor own distributed electricity generation, storage and utilization facilities via various mobile terminals.

When the ammeter 200 is a traditional one-way ammeter, the measuring module 202 in the ammeter 200 is only used for measuring the electricity consumption at the power consumption side. By using the energy internet router 100 in combination with the ammeter 200, the electricity users at the power consumption side in the blockchain can conveniently purchase the low-cost electricity of distributed wind power PV and storage battery.

When the ammeter 200 is a two-way smart power meter with the blockchain module, the energy internet router 100 is used in combination with the ammeter 200, mainly for energy exchange and routing management among multiple distributed energy networks, as well as wind energy storage and load co-absorption in the same LAN, but also used for acquiring the electricity measurement data of the ammeter 200. The two-way smart power meter with the blockchain module is used for distributed power generation and storage, two-way measurement of generating capacity and electricity consumption of electricity users, as well as electricity measurement, transaction and record of the distributed smart micro grid.

### Embodiment 2

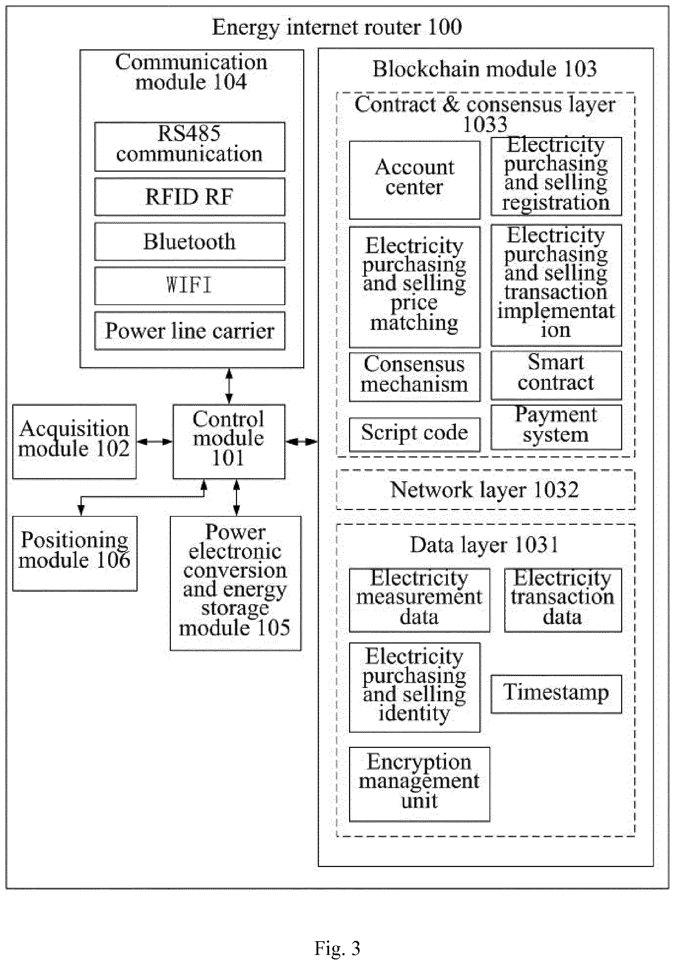

Fig. 3 shows a constitutional diagram of the energy internet router provided by the Embodiment 2 of this invention.

Please refer to Fig. 3. The difference between this embodiment and the Embodiment 1 is that in this embodiment, the energy internet router 100 also comprises a positioning module 106, which is connected with the CPU 101 for positioning the geographical position of the energy internet router 100.

The positioning module 106 is used for positioning the geographical position of the energy internet router 100 to obtain the geographical position information of the blockchain node. It realizes the informatization of the whole smart grid, so as to lay a foundation for the optimal rationalization of the point-to-point automatic electricity transaction in the blockchain, that is to say, it can be agreed in the blockchain smart contract that in the case of the same offer, the electricity transaction between two geographically closest nodes may be achieved in priority, thus to minimize the power transmission costs and losses.

Optionally, the positioning module 106 adopts a GIS geographic information positioning chip.

Other structures, composition and connection relation of the energy internet router 100 in this embodiment are the same as those of the Embodiment 1, which will not be described here.

### Embodiment 3

The difference between this embodiment and the Embodiment 1/2 is that the blockchain module 103 in this embodiment adopts a virtual currency or an electronic currency for electricity transaction or settlement.

This embodiment is suitable for the electricity transaction or settlement in the regional power grid. The blockchain module 103 may carry out the transaction or settlement between the Buyer and the Seller through the virtual currency or electronic currency. It is even possible for the blockchain ammeter and the grid operator to set up the virtual currency defined and circulated within the grid for electricity transaction or settlement. The use of virtual currency and electronic currency makes the electricity transaction or settlement in the regional power grid more flexible, convenient and secure.

In this embodiment, the Buyer and the Seller of the electricity purchasing and selling transaction need to set up a virtual currency or electronic currency account for electricity transaction or settlement.

Other structures, composition and connection relation of the energy internet router 100 in this embodiment are the same as those of the Embodiment 1, which will not be described here.

The invention is aimed at protecting an energy internet route, which collects the electricity of distributed wind power PV and storage battery through the blockchain electricity transaction monitoring platform by using the multilevel structure of the internet of things. The energy internet router is set with a blockchain module, which is mainly used for electricity transaction and recording, so that the final electricity information and point-to-point electricity transaction information are distributed and stored in the blockchain network in a tamper-resistant manner. The energy internet router provided by the invention realizes the distributed power generation and storage, and two-way measurement of generating capacity and electricity consumption of electricity users by combining with the ammeter. The electricity of a distributed smart micro grid can be measured, traded and recorded. The energy internet router can be used as the basis of transaction charge at the distributed generation and the power consumption sides, making the micro grid more economically viable. Meanwhile, the users can intelligently manage and monitor own distributed electricity generation, storage and utilization facilities via various mobile terminals. The energy internet router of the invention will have a broad market space and will become a major provider of big data for the energy internet in the future.

It shall be understood that the specific embodiments herein are only used for illustrating or explaining the principle of the invention exemplarily, and do not constitute the limitation to the invention. Therefore, any modification, equivalent replacement, improvement, etc. made without deviation from the spirit and scope of the invention shall be included in the protection scope of the invention. In addition, the claims herein are intended to cover all variations and modifications within the scope and boundary of the claims or the equivalent form of such scope and boundary.

## Claims

1. An energy internet router (100), wherein it is composed of:
a control module (101), which is used for energy exchange and routing management among multiple distributed energy stations and the distributed energy users, as well as point-to-point electricity transaction control in the same local area network (LAN);
an acquisition module (102), which is connected with the control module (101) for acquiring the electricity measurement data of the ammeter (200); and
a blockchain module (103), which is used for data interaction with the control module (101), implementation of point-to-point electricity transaction among the nodes in the blockchain network in the area, and storage of distributed electricity measurement and transaction data.

2. The energy internet router (100) according to claim 1, wherein
the blockchain module (103) is set with a data layer (1031), which is used for storing the following data:
electricity measurement data obtained by the ammeter (200);
electricity transaction data, i.e. all the point-to-point electricity transaction data in the blockchain;
electricity purchasing and selling identity, i.e. a binary character string makes the electricity purchasing and selling identity for distinguishing the Buyer and the Seller; and
timestamp, used for recording the time of point-to-point electricity transactions in the blockchain network;
The data layer (1031) is also used for stamping the timestamp for the electricity purchasing and selling transaction data occurring at each node, forming the data block and recording it in the blockchain in a tamper-resistant manner.

3. The energy internet router (100) according to claim 2, wherein
the power purchasing and selling identifier refers to a binary character string having a predetermined meaning; a first set value of the binary character string represents that a current node is the power seller; and a second set value of the binary character string represents that a current node is the power purchaser.

4. The energy internet router (100) according to claim 2, wherein
the data layer (1031) comprises an encryption management unit, which is used for encrypting the data by means of hardware encryption and managing the user's private key information.

5. The energy internet router (100) according to claim 4, wherein
the data layer (1031) also comprises one or the combination of several of data block, Hash, Merkle, root data, point-to-point network, key management, public key, private key, and asymmetric encryption and authentication mechanism.

6. The energy internet router (100) according to claim 2, wherein
the blockchain module (103) is also set with a contract & consensus layer (1033), which is used for automatically confirming the electricity transaction between the Buyer and the Seller in the scope of the blockchain network by means of smart contract; the electricity transaction includes electricity price, electricity quantity and condition of the transaction.

7. The energy internet router (100) according to claim 6, wherein
the contract & consensus layer (1033) also comprises one or the combination of several of an account center unit, an electricity purchasing and selling registration unit, an electricity purchasing and selling price matching unit, an electricity purchasing and selling transaction implementation unit, a consensus mechanism unit, a smart contract unit, a script code unit and a payment system unit.

8. The energy internet router (100) according to claim 2, wherein
the blockchain is a private chain or a consortium chain;
all or part of the nodes of the private chain or the consortium chain have relatively complex access to reading, writing and bookkeeping.

9. The energy internet router (100) according to any one of claims 1-8, wherein it further comprises:
a communication module (104), which is connected with the control module (101) for data transmission;
The blockchain module (103) transmits the processed data to a blockchain electricity transaction monitoring platform (300) through the communication module (104).

10. The energy internet router (100) according to claim 9, wherein
the communication module (104) comprises one or the combination of several of RS485 communication, RFID RF, Bluetooth, WIFI and power line carrier.

11. The energy internet router (100) according to claim 9, wherein it further comprises:
a positioning module (106), which is connected with the control module (101) and used for positioning the geographical position of the energy internet router (100).

12. The energy internet router (100) according to claim 1, wherein
the blockchain module (103) may adopt the virtual currency or electronic currency for electricity transaction or settlement.

13. The energy internet router (100) according to claim 1, wherein
the blockchain module (103) is also used for giving a unique ID to each energy internet router (100) to form a node with unique ID in the blockchain.
